(19) **Europäisches Patentamt / European Patent Office / Office européen des brevets**

(11) **EP 4 631 736 A1**

(12) **EUROPEAN PATENT APPLICATION**
published in accordance with Art. 153(4) EPC

(43) Date of publication:
**15.10.2025 Bulletin 2025/42**

(21) Application number: **23900715.6**

(22) Date of filing: **07.12.2023**

(51) International Patent Classification (IPC):
**B41N 1/12** (2006.01) **B41C 1/05** (2006.01)
**B41M 1/10** (2006.01)

(52) Cooperative Patent Classification (CPC):
**B41C 1/05; B41M 1/10; B41N 1/12**

(86) International application number:
**PCT/JP2023/043776**

(87) International publication number:
**WO 2024/122603 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2022 JP 2022195670**

(71) Applicant: **Asahi Kasei Kabushiki Kaisha**
**Tokyo 1000006 (JP)**

(72) Inventors:
• **NAKAMURA, Akinao**
**Tokyo 100-0006 (JP)**
• **SATO, Yoshihiko**
**Tokyo 100-0006 (JP)**

(74) Representative: **Strehl & Partner mbB**
**Maximilianstrasse 54**
**80538 München (DE)**

(54) **PRINTING INTAGLIO PLATE AND PRODUCTION METHOD THEREFOR, AND PRINTING METHOD**

(57) A printing intaglio plate including a resin layer constituting a plate surface, in which a Shore A hardness of the resin layer is 30 degrees or more and 90 degrees or less, a surface free energy of the resin layer is 10 mN/m or more and 35 mN/m or less, and the resin layer includes a cell on the plate surface and a coefficient of variation in cell volume of the cell, for printing at the same ink concentration, is 0.2 or less.

Figure 1A

EP 4 631 736 A1

## Description

## Technical Field

The present invention relates to a printing intaglio plate and a production method thereof, and a printing method.

## Background Art

Gravure printing has been conventionally used for printing high-quality photographs and the like. Plates for gravure printing (gravure cylinders), commonly used, are those obtained by using hard copper plates for plate cylinders, and engraving depressed portions on surfaces of the copper plates with diamond blades or the like and furthermore plating hard metals such as chromium on the plate surfaces.

The depth of depressed portions can be freely controlled. In recent years, engraving methods with laser light, or methods involving patterning photoresists with photoengraving techniques and furthermore etching metals have also been used for formation of depressed portions in some cases. Inks can be stored in depressed portions thus formed, and transferred to objects, to form high-quality print products in which gradation is expressed by the ink thicknesses.

In recent years, there has been a trend toward small-lot and high-mix production of print products, and gravure printing has also been demanded to cope with small-lot and high-mix production. Environment adaptability of printing techniques and print products has attracted attention. However, metallic printing intaglio plates used in gravure printing are produced from metals and are not suited for small-lot and high-mix production. In addition, metal waste liquids are generated in the course of production, and therefore environment adaptability is also not satisfied.

Therefore, there is a demand for a resin gravure plate capable of addressing both the issues of small-lot and high-mix production, and environment adaptability. As a resin gravure plate, for example, a cylindrical printing original plate where laser engraving can be made is known as disclosed in Patent Literature 1.

## Citation List

## Patent Literature

Patent Literature 1: Japanese Patent Laid-Open No. 2005-254696

## Summary of Invention

## Technical Problem

However, a conventional resin gravure plate has the problem of being large in variation in volume of a cell for printing at the same ink concentration, and in particular, being deteriorated in transfer stability of an ink from a cell to a substrate in a highlight region. A conventional resin gravure plate cannot realize an ink concentration in a solid region, at a level comparable with that of a metallic gravure plate.

The present invention has been made in view of the above problems, and an object thereof is to provide, for example, a printing intaglio plate and a production method thereof, and a printing method, in which both an enhancement in ink transfer stability to a highlight region and an enhancement in ink deposition on a solid region are achieved.

## Solution to Problem

The present inventors have made intensive studies in order to solve the above problems. As a result, the inventors have found that the above problems can be solved by adjusting the Shore A hardness, the surface free energy and the coefficient of variation in cell volume of a resin layer in a resin gravure plate, leading to completion of the present invention.

Specifically, the present invention is as follows.

[1] A printing intaglio plate comprising a resin layer constituting a plate surface, wherein

a Shore A hardness of the resin layer is 30 degrees or more and 90 degrees or less,

a surface free energy of the resin layer is 10 mN/m or more and 35 mN/m or less, and

the resin layer comprises a cell on the plate surface and a coefficient of variation in cell volume of the cell, for printing at the same ink concentration, is 0.200 or less.

[2] The printing intaglio plate according to [1], wherein the same ink concentration is 0.50 or less.

[3] The printing intaglio plate according to [1] or [2], wherein the resin layer comprises at least one selected from the group consisting of a photosensitive resin and a thermosetting resin.

[4] The printing intaglio plate according to any one of [1] to [3], wherein the resin layer comprises 0.10 parts by mass or more and 15.0 parts by mass or less of a silicone compound based on a total amount.

[5] The printing intaglio plate according to any one of [1] to [4], wherein a depth of the cell is 0.10 $\mu$m or more and 100 $\mu$m or less.

[6] The printing intaglio plate according to any one of [1] to [5], comprising a cylinder, wherein
the resin layer of a cylindrical form is disposed on a surface of the cylinder.

[7] The printing intaglio plate according to [6], comprising a support layer between the cylinder and the resin layer of a cylindrical form.

[8] A method for producing the printing intaglio plate according to any one of [1] to [7], comprising a processing step of forming a depressed portion in the resin layer with a laser.

[9] The method for producing a printing intaglio plate according to [8], wherein an oscillation wavelength of the laser is 100 nm or more and 800 nm or less.

[10] The method for producing a printing intaglio plate according to [8] or [9], wherein

the laser is a pulsed oscillation laser, and

a pulse width of the pulsed oscillation laser is 1 fs or more and 1 ns or less.

[11] The method for producing a printing intaglio plate according to [10], wherein a pulse energy of the laser is 1.00 $\mu$J or more and 1.00 mJ or less.

[12] The method for producing a printing intaglio plate according to [10] or [11], wherein an overlap ratio of the laser in the processing step is 50.0% or more and 99.9% or less.

[13] The method for producing a printing intaglio plate according to any one of [8] to [12], wherein a spot diameter of the laser is 1.0 $\mu$m or more and 20 $\mu$m or less.

[14] The method for producing a printing intaglio plate according to any one of [8] to [13], wherein the resin layer is directly irradiated with the laser in the processing step.

[15] The method for producing a printing intaglio plate according to any one of [8] to [13], comprising, in the processing step, a step of disposing the resin layer on the cylinder and then forming the depressed portion or a step of forming the depressed portion in the resin layer in advance and then disposing the resin layer on the cylinder.

[16] A printing method comprising

a coating step of filling the cell in the printing intaglio plate according to any one of [1] to [7], with an ink, and

a transfer step of transferring the ink with which the cell is filled, to a surface of a substrate, to obtain a print product.

[17] A print product which is a print product obtained by printing with the printing intaglio plate according to any one of [1] to [7], wherein
an ink concentration in a solid region is 2.10 or more.

[18] A print product, wherein

a transfer ratio in a highlight region is 90% or more, and

an ink concentration in the highlight region is 0.50 or less.

**Advantageous Effect of Invention**

According to the present invention, it is possible to provide, for example, a printing intaglio plate and a production method thereof, and a printing method, in which both an enhancement in ink transfer stability to a highlight region and an enhancement in ink deposition on a solid region are achieved.

**Brief Description of Drawings**

[Figure 1A] Figure 1A illustrates a perspective view illustrating one aspect of a printing intaglio plate of the present embodiment.

[Figure 1B] Figure 1B illustrates a cross-sectional view and a plan view each illustrating one aspect of a printed surface in a region S1 in Figure 1A.

[Figure 1C] Figure 1C illustrates a perspective view illustrating another aspect of a printing intaglio plate of the present embodiment.

[Figure 1D] Figure 1D illustrates (a) one example of a plan view illustrating a defect which can occur in a highlight region, and (b) one example of a plan view of a non-highlight region.

[Figure 2A] Figure 2A illustrates a schematic diagram illustrating a conventional method for producing a metal gravure plate.

[Figure 2B] Figure 2B illustrates a schematic diagram illustrating one aspect of a method for producing a printing intaglio plate of the present embodiment.

[Figure 2C] Figure 2C illustrates a schematic diagram illustrating one aspect of a method for producing a printing intaglio plate of the present embodiment.

[Figure 2D] Figure 2D illustrates a schematic diagram illustrating one aspect of a method for producing a printing intaglio plate of the present embodiment.

[Figure 2E] Figure 2E illustrates a schematic diagram illustrating one aspect of a method for producing a printing intaglio plate of the present embodiment.

[Figure 3] Figure 3 illustrates a schematic diagram illustrating one aspect of a printing method with a printing intaglio plate of the present embodiment.

[Figure 4] Figure 4 illustrates a schematic diagram illustrating one section of a production process of a printing intaglio plate in Examples.

[Figure 5] Figure 5 illustrates a cross-sectional view and a plan view each illustrating a cell shape of a printing intaglio plate in Examples.

**Description of Embodiments**

Hereinafter, a mode for carrying out the present invention (hereinafter, referred to as "the present embodiment".) is described in detail, if necessary, with reference to the drawings, but the present invention is not limited thereto and can be variously modified without departing from the gist thereof. In the drawings, the same element is marked with the same reference sign, and any overlapping description is omitted. The positional relationship such as up and down and left and right is based on the positional relationship illustrated in the drawings, unless particularly noted. The dimensional ratio in the drawings is not limited to the ratio illustrated in the drawings.

1. Printing intaglio plate

A printing intaglio plate of the present embodiment includes a resin layer constituting a plate surface, in which the Shore A hardness of the resin layer is 30 degrees or more and 90 degrees or less, the surface free energy of the resin layer is 10 mN/m or more and 35 mN/m or less, and the resin layer includes a cell on the plate surface and the coefficient of variation in cell volume of the cell, for printing at the same ink concentration, is 0.200 or less.

1.1. Resin layer

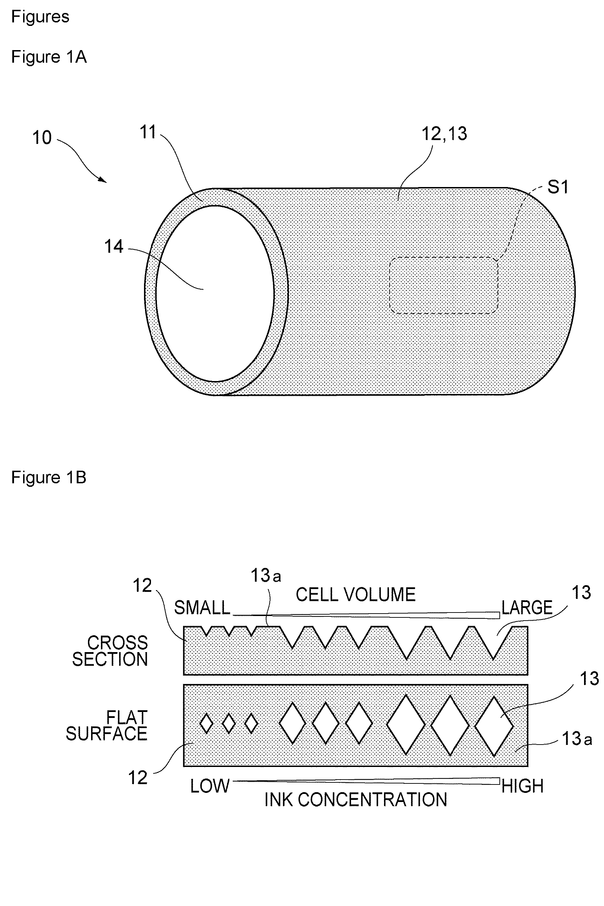

Figure 1A illustrates a perspective view illustrating one aspect of the printing intaglio plate of the present embodiment. As illustrated in Figure 1A, a printing intaglio plate 10 of the present embodiment includes a resin layer 11 constituting a plate surface 12. The printing intaglio plate of the present embodiment may have a cylindrical shape as illustrated in Figure 1A, a plate shape, or any other shape. The printing intaglio plate of the present embodiment is preferably a printing intaglio plate used in gravure printing.

1.1.1. Cell

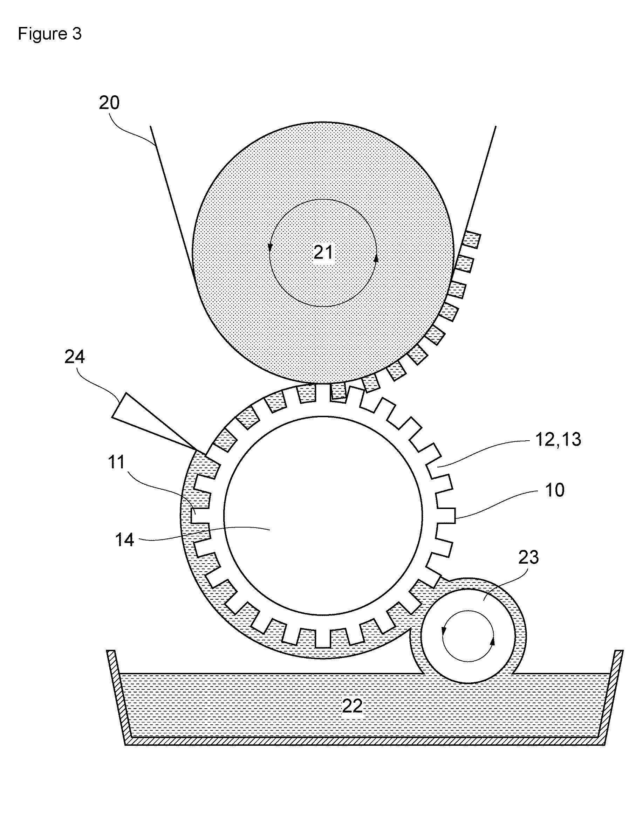

The resin layer 11 includes a cell 13 in the plate surface 12. The cell 13 is a depressed portion formed in the resin layer 11. As described below, printing on the printing intaglio plate used in gravure printing is made by retaining an ink 22 in the cell 13 and transferring the ink 22 retained in the cell 13, to a substrate 20 (see Figure 3).

Figure 1B illustrates a cross-sectional view and a plan view each illustrating one aspect of a cell 13 formed in a region S1 in Figure 1A. As illustrated in Figure 1B, the amount of an ink retained in the cell 13 differs depending on the volume of the cell 13. The amount of an ink retained in such one cell 13 is associated with the amount of an ink per dot transferred to the substrate 20. Accordingly, as the volume of the cell 13 is larger, the ink concentration is higher. Thus, gravure printing can allow for formation of a high-quality print product expressing gradation by the thickness of an ink.

In the present embodiment, the "solid region" is a region in which a relatively large cell 13 is disposed on the resin layer surface (plate surface). The solid region refers to, for example, a region in which the ink concentration represented by the following expression is 2.0 or more.

$$\text{Ink concentration} = \log_{10} (\text{Intensity of incident light/Intensity of reflected light})$$

In embodiments, the "highlight region" is a region in which a relatively small cell is disposed on the resin layer surface (plate surface). The highlight region refers to, for example, a region in which the ink concentration represented by the above expression is 0.50 or less.

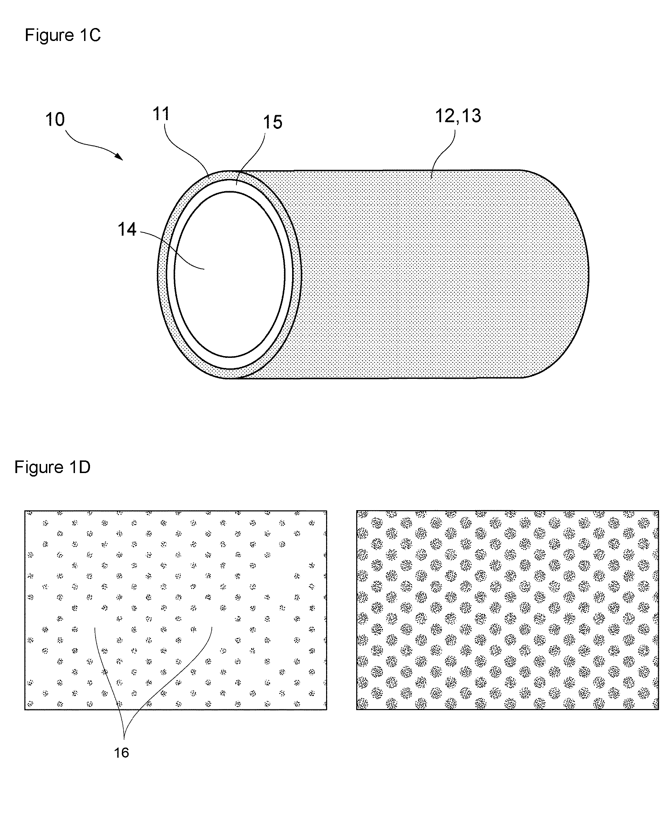

Meanwhile, a phenomenon can occur in which, as the cell 13 is smaller, the transfer ability of the ink 22 retained in the cell 13, to the substrate 20, is reduced. A reduction in transfer ability leads to the occurrence of a defect 16 as illustrated in Figure 1C(a). Such a phenomenon refers to low transfer stability. Such a defect 16 does not occur according to an increase in size of the cell 13 as in Figure 1C(b).

On the other hand, a phenomenon can occur in which, as the cell 13 is larger, the amount of an ink transferred is not increased according to the amount of increase in volume of the cell 13. If the amount of an ink transferred is not increased on target, objective gradation expression cannot be achieved in the resulting print product. Such a phenomenon refers to poor ink deposition.

Other portion than the cell 13 in the plate surface 12 is referred to as a land 13a. The ink 22 is not retained in the land 13a, and the ink 22 attached to the land 13a is removed by a doctor blade 24 or the like. When the ink 22 is then transferred to the substrate 20, the land 13a is pushed together with the substrate 20, to transfer the ink 22 retained in the cell 13, to the substrate 20.

The depth of the cell 13, while depending on an objective print product, is preferably 0.10 $\mu$m or more and 100 $\mu$m or less, 0.75 $\mu$m or more and 80 $\mu$m or less, 1.0 $\mu$m or more and 75 $\mu$m or less, or 2.5 $\mu$m or more and 50 $\mu$m or less. The depth of the cell 13 in the solid region is preferably 20 $\mu$m or more and 100 $\mu$m or less, 25 $\mu$m or more and 80 $\mu$m or less, or 30 $\mu$m or more and 60 $\mu$m or less. The depth of the cell 13 in the highlight region is preferably 0.10 $\mu$m or more and less than 20 $\mu$m, 1.0 $\mu$m or more and 15 $\mu$m or less, or 2.5 $\mu$m or more and 10 $\mu$m or less.

The longer axis in planar view of the cell 13, while depending on an objective print product, is preferably 5 $\mu$m or more and 500 $\mu$m or less, 15 $\mu$m or more and 400 $\mu$m or less, or 25 $\mu$m or more and 300 $\mu$m or less. The longer axis in planar view of the cell 13 in the solid region is preferably 100 $\mu$m or more and 500 $\mu$m or less, 125 $\mu$m or more and 400 $\mu$m or less, or 150 $\mu$m or more and 300 $\mu$m or less. The longer axis in planar view of the cell 13 in the highlight region is preferably 5 $\mu$m or more and less than 100 $\mu$m, 15 $\mu$m or more and 90 $\mu$m or less, or 25 $\mu$m or more and 80 $\mu$m or less.

The longer axis means a longer axis in the case of drawing of an ellipse circumscribed around a cell of any shape.

The shape of the cell 13 is not particularly limited, and examples thereof include round shapes such as a circular shape and an elliptical shape; and multangular shapes such as a triangular shape and a quadrangular shape.

The thickness of the resin layer 11 is preferably 250 $\mu$m or more and 10000 $\mu$m or less, 500 $\mu$m or more and 7500 $\mu$m or less, or 1000 $\mu$m or more and 5000 $\mu$m or less.

1.1.2. Physical properties

The Shore A hardness of the resin layer 11 is 30 degrees or more and 90 degrees or less, and preferably 32 degrees or more and 85 degrees or less, 35 degrees or more and 80 degrees or less, 40 degrees or more and 80 degrees or less, 45 degrees or more and 80 degrees or less, or 50 degrees or more and 80 degrees or less. The Shore A hardness is 30 degrees or more and thus the resin layer 11 is inhibited from being damaged during removal of an excess ink 22 by the doctor blade 24. In addition, degradation of the resin layer 11 due to repeated printing can be suppressed, and thus the product lifetime of the printing intaglio plate 10 tends to be more enhanced. Furthermore, the Shore A hardness is 90 degrees or less and thus followability of the printing intaglio plate 10 to the substrate 20 tends to be more enhanced. Therefore, any cell in the solid region, the highlight region, and the like tends to be more enhanced in transfer ability of an ink from such a cell to the substrate. The Shore A hardness is 90 degrees or less and thus particularly ink transfer stability in the highlight region is more enhanced and ink deposition on the solid region is more enhanced.

The Shore A hardness of the resin layer 11 can be adjusted by selection of the type and amount of a component constituting the resin layer 11. For example, the Shore A hardness may also be adjusted by the types and amounts of a thermoplastic elastomer and a plasticizer described below. The Shore A hardness of the resin layer 11 can be measured by a method described in Examples.

The surface free energy of the resin layer 11 is 10 mN/m or more and 35 mN/m or less, and is preferably 15 mN/m or more and 33 mN/m or less, 20 mN/m or more and 33 mN/m or less, or 25 mN/m or more and 33 mN/m or less. The surface free energy is 10 mN/m or more and thus affinity between the resin layer 11 and the ink 22 is more enhanced to be less likely to repel the ink 22 by the resin layer 11, resulting in a more enhancement in ink filling ability of the cell 13. Thus, for example, ink deposition on the solid region is improved and expression ability of gradation is more enhanced. The surface free energy is 35 mN/m or less and thus affinity between the resin layer 11 and the ink 22 is reduced to easily repel the ink 22 by the resin layer 11. Thus, for example, any cell in the solid region, the highlight region, and the like is more enhanced in transfer ability of an ink from such a cell to the substrate. In other words, the ink 22 is less likely to partially remain in the cell 13 to make it easier to transfer the ink 22 to the substrate 20.

The surface free energy of the resin layer 11 can be adjusted by selection of the type and amount of a component constituting the resin layer 11. For example, the surface free energy may also be adjusted by the type and amount of a silicone compound described below. The surface free energy of the resin layer 11 can be measured by a contact angle method described in Examples.

The cell 13 formed in the resin layer 11 is desirably formed at a size as designed. However, the size of the cell 13 can be substantially varied from a value defined. In the present embodiment, in order to prescribe the degree of this variation, the "coefficient of variation in cell volume of a cell for printing at the same ink concentration" (hereinafter, also simply referred to as "coefficient of variation in cell volume".) is used.

The coefficient of variation in cell volume is 0.200 or less, and is preferably 0.010 or more and 0.200 or less, 0.010 or more and 0.180 or less, or 0.010 or more and 0.150 or less. The coefficient of variation in cell volume is 0.200 or less and thus the difference between reception and transfer of an ink per the cell 13 is less likely to occur and a part "defect" where no ink in the highlight region or the like is transferred (see Figure 1D) is less likely to be generated.

The coefficient of variation in cell volume can be adjusted, for example, with a very high frequency pulsed laser in a production method described below. For example, the coefficient of variation in cell volume can be controlled to be low by controlling the oscillation wavelength, the pulse width, the pulse energy, the overlap ratio, and the spot diameter of a pulsed oscillation laser. Additionally, the coefficient of variation in cell volume can also be controlled by optimizing the compositional ratio of the resin layer. The coefficient of variation in cell volume is defined by the following expression. A low coefficient of variation in cell volume means that a cell according to a value defined can be formed. A specific measurement method can follow a method described in Examples.

Coefficient of variation in cell volume = Standard deviation of cell volume/Arithmetic average of cell volume

The same ink concentration as an object in calculation of the coefficient of variation in cell volume is preferably 0.50 or less, or may be 0.50, in particular, from the viewpoint of an enhancement in transfer stability in the highlight region.

1.1.3. Compositional ratio

The resin layer may be a composition including a thermoplastic resin, a composition including a thermosetting resin, or a composition including a photosensitive resin, or may include a cured product after photocuring or thermal curing. In particular, the resin layer preferably includes a cured product after photocuring or thermal curing, and more preferably includes a cured product obtained by curing a photosensitive resin with light such as ultraviolet light, or a cured product obtained by thermally curing a thermosetting resin. Thus, the resin layer tends to be inhibited from being defective even if contacted with a doctor blade during printing, to allow the shape of the intaglio plate to be kept. The curing is preferably curing by performing exposure of the entire surface.

In the present embodiment, whether the terms "photosensitive resin" and "thermosetting resin" each indicate a resin before curing or a resin after curing can be distinguished by whether or not an operation for curing is performed in the relevant context. If such a term is used in a context indicating no operation for curing, such resin before curing and resin after curing are not distinguished, and it can be understood to mean a resin in a state before curing or it can be understood to mean a resin in a state after curing.

Examples of such a component constituting the resin layer 11 include, but not particularly limited, one including a polymer component, a monomer component, a polymerization initiator, a polymerization inhibitor, a plasticizer, and a silicone compound. A polymerizable monomer in the resin layer 11 may be polymerized by a polymerization initiator. Hereinafter, each component is described.

Examples of the polymer component include a resin, an elastomer, and rubber which are solid at ordinary temperature. Examples of the resin include, but not particularly limited, thermoplastic resins such as polyolefin, polyvinyl chloride, polystyrene polyurethane, an acrylic resin, polyamide, polycarbonate, polyester, and thermoplastic polyimide; and thermosetting resins such as a phenol resin, an epoxy resin, a melamine resin, a urea resin, unsaturated polyester, polyurethane, and thermosetting polyimide.

Examples of the elastomer include, but not particularly limited, styrene-based thermoplastic elastomers such as a styrene-butadiene block copolymer, a styrene-isoprene block copolymer, and sebs(polystyrene-polyethylene/polybutylene-polystyrene); olefin-based thermoplastic elastomers; urethane-based thermoplastic elastomers; ester-based thermoplastic elastomers; amide-based thermoplastic elastomers; silicone-based thermoplastic elastomers; and fluorine-based thermoplastic elastomers.

In particular, the polymer component is preferably an elastomer, more preferably a styrene-based thermoplastic elastomer. Such a polymer component is used to result in a tendency to more enhance ink transfer stability to the highlight region and ink deposition on the solid region.

The content of the polymer component is preferably 40 parts by mass or more and 95 parts by mass or less, 50 parts by mass or more and 90 parts by mass or less, or 60 parts by mass or more and 85 parts by mass or less based on a total amount of 100 parts by mass of the resin layer 11. The content of the polymer component is in the above range to result in a tendency to more enhance ink transfer stability to the highlight region and ink deposition on the solid region.

The number average molecular weight (Mn) of the polymer component is preferably $1.0 \times 10^4$ or more and $100 \times 10^4$ or less, $3.0 \times 10^4$ or more and $75 \times 10^4$ or less, or $5.0 \times 10^4$ or more and $50 \times 10^4$ or less. The number average molecular weight (Mn) is in the above range to result in a tendency to more enhance ink transfer stability to the highlight region and ink deposition on the solid region. The number average molecular weight (Mn) can be measured with a known procedure by gel permeation chromatography.

Examples of the monomer component include, but not particularly limited, olefins such as ethylene, propylene, styrene and divinylbenzene; acetylenes; acrylic substances such as (meth)acrylic acid and (meth)acrylic acid ester; haloolefins; unsaturated nitriles such as acrylonitrile; (meth)acrylic amide and its derivative; allyl compounds such as allyl alcohol and allyl isocyanate; unsaturated dicarboxylic acids such as maleic anhydride, maleic acid, fumaric acid, and itaconic acid, as well as their derivatives; vinyl acetates; n-vinylpyrrolidone; n-vinyl carbazole; and cyanate esters.

Examples of the (meth)acrylic acid ester include, but not particularly limited, aromatic group-containing (meth)acrylic acid esters such as phenoxyethyl methacrylate; alkylene glycol group-containing (meth)acrylic acid esters such as alkoxy polyalkylene glycol (meth)acrylate; and polyfunctional (meth)acrylates such as alkylene diacrylate and trimethylolpropane trimethacrylate.

In particular, acrylic substances are preferred, and polyfunctional (meth)acrylates are more preferred. Such a monomer component is used to result in a tendency to more enhance ink transfer stability to the highlight region and ink deposition on the solid region.

The content of the monomer component is preferably 0.1 parts by mass or more and 10 parts by mass or less, 0.5 parts by mass or more and 7.5 parts by mass or less, or 1.0 part by mass or more and 5 parts by mass or less based on a total amount of 100 parts by mass of the resin layer 11. The content of the monomer component is in the above range to result in a tendency to more enhance ink transfer stability to the highlight region and ink deposition on the solid region.

Examples of the polymerization initiator include, but not particularly limited, photoradical generators such as benzophenones, xanthenes, thioxanthones, anthraquinones, benzoin alkyl ethers, acetophenones, acyl oxime esters, azo compounds, organosulfur compounds, and diketones; thermal radical generators such as organic peroxide, inorganic peroxide, organosilicon peroxide, hydroperoxide, an azo compound, a thiol compound, a phenol resin, an amino resin, a halogen compound, and an aldehyde compound; photo-acid generators such as an aromatic sulfonium salt, an aromatic iodonium salt, an aromatic phosphonium salt, and an aromatic sulfoxonium salt; and photo-base generators such as a benzil-type photodeprotective group-type compound, an amineimide-type compound, a urethane oxime-type compound, an alkyl oxime-type compound, a coumaric acid amide-type compound, and a 2-aminotropone-type compound.

The content of the polymerization initiator is preferably 1.0 part by mass or more and 15 parts by mass or less, 2.0 parts by mass or more and 10 parts by mass or less, or 3.0 parts by mass or more and 7.5 parts by mass or less based on a total amount of 100 parts by mass of the resin layer 11.

Examples of the plasticizer include, but not particularly limited, liquid rubber such as liquid butadiene rubber, liquid isoprene rubber, liquid styrene-butadiene rubber, liquid acrylic rubber, and liquid nitrile rubber; and liquid paraffin.

The content of the plasticizer is preferably 2.5 parts by mass or more and 40 parts by mass or less, 5.0 parts by mass or more and 30 parts by mass or less, or 7.5 parts by mass or more and 20 parts by mass or less based on a total amount of 100 parts by mass of the resin layer 11. The content of the plasticizer is in the above range to result in a tendency to more enhance ink transfer stability to the highlight region and ink deposition on the solid region.

Examples of the polymerization inhibitor include, but not particularly limited, phenol-based compounds such as hydroquinone and 2,6-di-t-butyl-p-cresol; thioether-based compounds such as phenothiazine and distearyl thiodipropionate; amine-based compounds such as p-phenylenediamine; and nitroso compounds such as n-nitrosodiphenylamine.

The content of the polymerization inhibitor is preferably 0.10 parts by mass or more and 10 parts by mass or less, 0.25 parts by mass or more and 7.5 parts by mass or less, or 0.50 parts by mass or more and 3.0 parts by mass or less based on a total amount of 100 parts by mass of the resin layer 11.

The resin layer 11 may include a silicone compound. Thus, there is a tendency to more enhance ink transfer stability to the highlight region and ink deposition on the solid region.

Examples of the silicone compound include, but not particularly limited, non-modified silicone oil such as dimethyl silicone oil and methyl phenyl silicone oil; and modified silicone oil such as carbinol-modified silicone oil, amino-modified silicone oil, polyether-modified silicone, aralkyl-modified silicone, fluoroalkyl-modified silicone, and long-chain alkyl-modified silicone.

The content of the silicone compound is preferably 0.01 parts by mass or more and 20.0 parts by mass or less, 0.01 parts by mass or more and 15.0 parts by mass or less, 0.05 parts by mass or more and 10.0 parts by mass or less, 0.10 parts by mass or more and 5.0 parts by mass or less, or 0.10 parts by mass or more and 3.0 parts by mass or less based on a total amount of 100 parts by mass of the resin layer 11. The content of the silicone compound is in the above range to result in tendencies to reduce tackiness and surface friction resistance of the plate surface 12 and more suppress ink filling-up ability during printing. The content of the silicone compound is in the above range to result in a tendency to more enhance ink transfer stability to the highlight region and ink deposition on the solid region.

The content of a photosensitive resin-derived substance is preferably 20 parts by mass or more and 99 parts by mass or less, 30 parts by mass or more and 99 parts by mass or less, or 35 parts by mass or more and 99 parts by mass or less based on a total amount of 100 parts by mass of the resin layer 11. The "photosensitive resin-derived substance" refers to both a photosensitive resin before light irradiation and a photosensitive resin after light irradiation. Thus, an intaglio plate for gravure printing can satisfy both ease of molding during production of a sleeve or a sheet and hardness of an intaglio plate for printing.

### 1.2. Cylinder

The printing intaglio plate of the present embodiment may further include a cylinder 14. In this case, the resin layer 11 of a cylindrical form is disposed so as to cover the outer periphery of the cylinder 14, as described in Figure 1A. The cylinder 14 may be one provided with a printer.

The material of the cylinder 14 is not particularly limited, and may be, for example, a metal such as aluminum, nickel, and iron; a resin such as polyester, polyimide, polyamide, polyphenylene ether, polyphenylene thioether, polysulfone, and an epoxy resin; or rubber such as EPDM, silicone, urethane, SB rubber, and fluororubber.

### 1.3. Support layer

The printing intaglio plate of the present embodiment may include a support layer 15 between the cylinder 14 and the resin layer 11 of a cylindrical form. Figure 1C illustrates an aspect in which the support layer 15 is included.

Examples of the material of the support layer 15 include, but not particularly limited, polyolefins such as polyethylene and polypropylene, polyhaloolefins such as polyvinyl chloride and polyvinylidene chloride, polystyrene, polyacrylonitrile, polyvinyl alcohol, polyvinyl acetate, polyvinyl acetal, polyacrylic acid, poly(meth)acrylic acid esters, poly(meth)acrylic amide, polyethers such as polyvinyl ether and polyphenylene ether, polythioethers such as polyphenylene thioether, polyesters such as polyethylene terephthalate, polycarbonate, polyacetal, polyurethane, polyamide, polyurea, and polyimide.

2. Method for producing printing intaglio plate

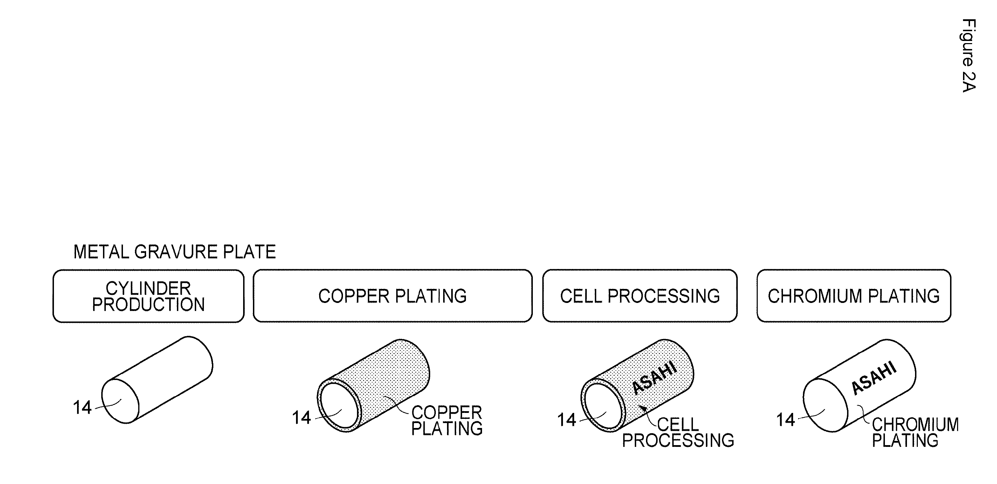

First, Figure 2A illustrates a schematic view illustrating a conventional method for producing a metal gravure plate. Gravure plates have been conventionally used for printing high-quality photographs and the like. The conventional method for producing a metal gravure plate requires, for example, multi-stage steps involving forming a copper plating layer on a cylinder, coating the copper plating layer with a photoresist layer to further form a pattern on the photoresist layer, etching the copper plating layer with such a photoresist pattern being interposed, to form a cell, and then plating a hard metal such as chromium. However, such production of a metal gravure plate causes generation of a waste liquid containing a large amount of metal and thus is problematic in terms of the environmental load.

There is currently required a printing intaglio plate for small lot printing, due to diversified printing demands. The conventional method for producing a metal gravure plate has the problem of being unsuitable for production of such a printing intaglio plate for small lot printing from the viewpoint of the cost and the environmental load.

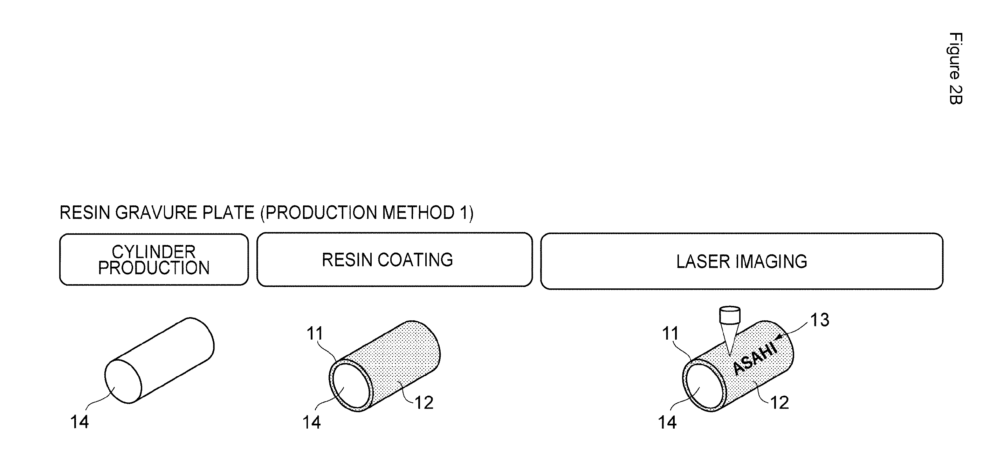

On the contrary, as illustrated in Figure 2B to Figure 2E, a method for producing the printing intaglio plate 10 of the present embodiment includes a processing step of forming a depressed portion in the resin layer with a laser. Thus, a printing intaglio plate in which a cell is formed in the resin layer can be obtained. According to such a production method, no waste liquid containing a large amount of metal is generated and a printing intaglio plate can be produced by a relatively simple process. Therefore, the environmental load can be reduced and a printing intaglio plate for small lot printing can be produced at a low cost.

2.1. Resin layer formation step

The method for producing the printing intaglio plate of the present embodiment may include a resin layer formation step of forming a resin layer before the processing step. Hereinafter, the production methods illustrated in Figure 2B to Figure 2D are the same in terms of the processing step of forming a depressed portion (cell), and are different methods in terms of the formation step of the resin layer 11.

In Figure 2B, for example, the resin layer 11 is formed by coating a side surface of the cylinder 14 with a resin composition. Thus, the resin layer 11 can be relatively simply formed.

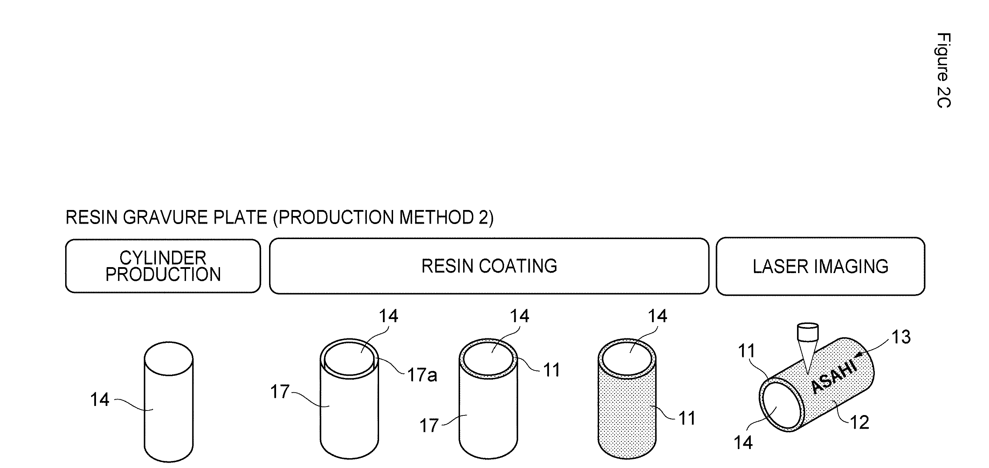

In Figure 2C, the resin layer 11 is formed by casting a resin composition in a space 17a of a mold 17 receiving the cylinder 14. Thus, the resin layer can be avoided from sagging before curing and the resin layer 11 can be formed with good moldability, as compared with the methods in Figure 2B and the like.

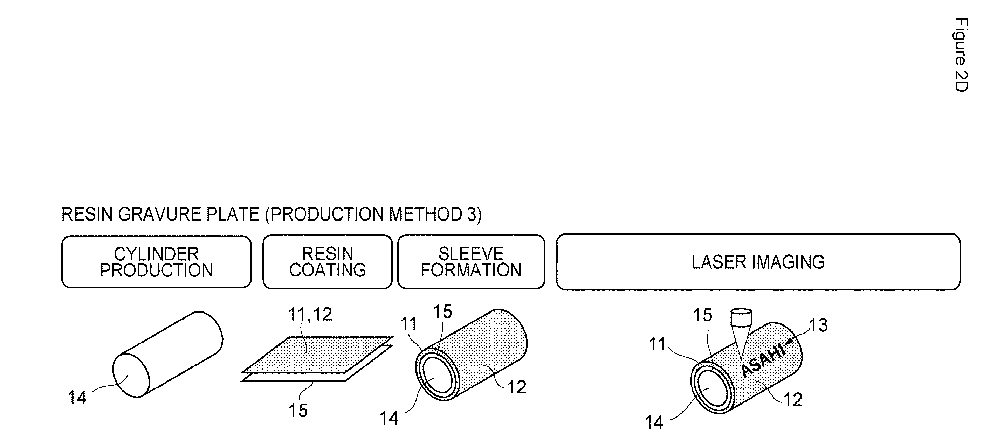

In Figure 2D, the resin layer 11 is formed by coating a surface of the support layer 15 with a resin composition. A layered article of the support layer 15 and the resin layer 11 is formed into a sleeve, and disposed on a surface of the cylinder 14. Thus, the resin layer can be avoided from sagging before curing and the resin layer 11 can be simply formed with good moldability, as compared with the methods in Figure 2B and the like.

2.2. Curing step

In the case where the resin composition used is photosensitive or thermosetting, the method for producing the printing intaglio plate of the present embodiment may further include a curing step of curing the resin composition by exposure or heat to form the resin layer 11. The curing step may be carried out as post-curing after a processing step described below.

The exposure curing method is not particularly limited, and, for example, a photosensitive resin layer may be irradiated with light to crosslink a monomer component or the like, thereby forming a cured product. Such crosslinking may also be performed by light irradiation under coating with the resin composition. Examples of the light source used for exposure curing can include, but not particularly limited, a high pressure mercury lamp, an ultra-high pressure mercury lamp, an ultraviolet fluorescent lamp, a germicidal lamp, a carbon-arc lamp, a xenon lamp, and a metal halide lamp.

The light with which the resin layer is irradiated preferably has light at a wavelength of 200 nm to 400 nm. In particular, a hydrogen abstraction type photopolymerization initiator often has strong light absorption in this wavelength region, and therefore, in the case where the light has light at a wavelength of 200 nm to 400 nm, curability of a photosensitive resin-cured product layer surface can be sufficiently ensured. The light source used for photocuring may be one light source, and two or more light sources different in wavelength may be used for such curing, thereby enhancing resin curability.

Examples of the thermal heating method include, but not particularly limited, a method by infrared light irradiation, a method by exposure to an atmosphere heated by an oven or the like, and a method by contact with an article of a heated metal or the like. The heating temperature may be selected depending on the type of a thermal polymerization initiator.

### 2.3. Processing step

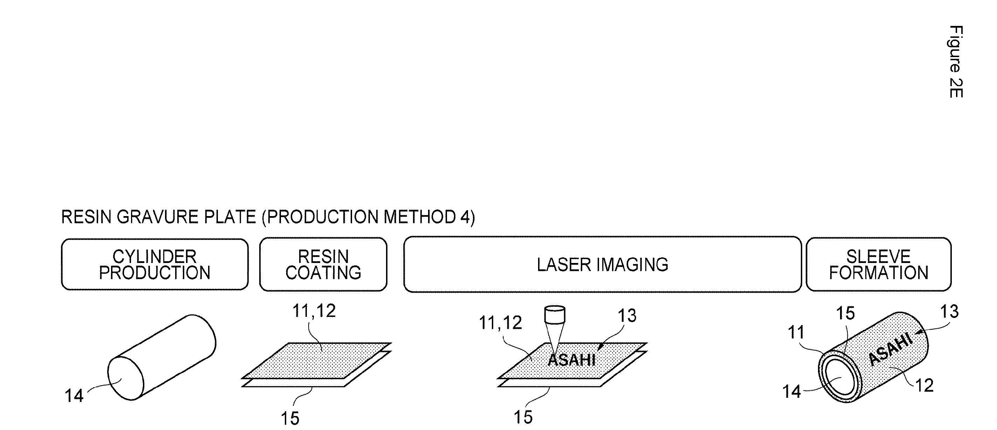

The method for producing the printing intaglio plate 10 of the present embodiment includes a processing step of forming a depressed portion in the resin layer, with a laser. Figure 2B to Figure 2D illustrate aspects in which a depressed portion is formed in the resin layer 11 of a cylindrical form, by laser imaging. On the contrary, Figure 2E illustrates an aspect in which a depressed portion is formed in a flat state in a layered article of the support layer 15 and the resin layer 11 with a laser. A depressed portion can be formed in a flat state with a laser, as in Figure 2E, and thus a depressed portion can be more simply formed.

In the processing step, a laser apparatus is operated by use of a computer with, as digital type data, an image to be formed, to make a relief image on an original plate. The laser used for laser engraving may be any one as long as a wavelength at which the original plate has an absorption is included, and is preferably one high in power in order to perform engraving at a high speed, and preferred one is a carbon dioxide laser, or an infrared light or infrared light emission solid-state laser such as a YAG laser or a semiconductor laser. A second harmonic wave of a YAG laser having an oscillation wavelength in the visible region, a copper vapor laser, an ultraviolet laser having an oscillation wavelength in the ultraviolet region, such as an excimer laser, and a YAG laser subjected to wavelength conversion to a third or fourth harmonic wave are capable of providing abrasion processing which cleaves a bond of an organic molecular and are suited for microfabrication.

The laser may be of continuous irradiation or pulse irradiation. Laser processing generally causes damage due to heat, to a workpiece (resin layer). A cell processed under such damage due to heat is easily varied in the shape or the like thereof. On the contrary, it is preferable in the present embodiment to adopt direct processing with an ultrashort pulse laser in cell processing. Thus, a thermal influence on the resin layer in the processing step can be decreased and therefore higher-accuracy and higher-definition cell processing can be made.

The resin layer may be directly irradiated or indirectly irradiated with a laser in the processing step. Here, the direct irradiation refers to irradiation of the resin layer with a laser without any photomask or the like being interposed, and the indirect irradiation refers to irradiation of the resin layer with a laser with a photomask or the like being interposed.

The oscillation wavelength of the laser is preferably 100 nm or more and 800 nm or less, 200 nm or more and 800 nm or less, 300 nm or more and 700 nm or less, or 300 nm or more and 600 nm or less. The oscillation wavelength of the laser is 100 nm or more to result in a tendency to allow the effect of improving the abrasion processing efficiency to be easily obtained. The oscillation wavelength of the laser is 800 nm or less to result in a tendency to obtain an abrasion processing quality in which a thermal influence is small.

The laser is preferably a pulsed oscillation laser. Thus, damage due to heat can be reduced. Therefore, cell processing tends to be higher in accuracy and higher in definition. The pulse width of the pulsed oscillation laser is preferably 1 fs or more and 1 ns or less, or 10 fs or more and 500 ps or less, further preferably 10 fs or more and 100 ps or less. The pulse width is in the above range to enable a high peak power to be obtained even at a small average power of the laser and enable a large energy to be input in an extremely short period of time. Therefore, the effect of not only enabling engraving of the printing original plate to be easily carried out, but also enabling a thermal influence to be suppressed is obtained, and the variation in pattern obtained is smaller.

The pulse energy of the laser is preferably 1.00 $\mu$J or more and 1.00 mJ or less, 1.00 $\mu$J or more and 500 $\mu$J or less, or 1.00 $\mu$J or more and 300 $\mu$J or less. The pulse energy of the laser is 1.00 $\mu$J or more to result in tendencies to allow for easy laser engraving of the resin layer 11 and enable an edge shape of the resulting pattern to be sharper. The pulse energy of the laser is 1.00 mJ or less to result in a tendency to allow for a more reduction in thermal influence on the resin layer 11. Thus, there is a tendency to enable a depressed pattern having a width substantially equal to the laser beam diameter to be obtained without excess melting or removal of the resin layer 11.

The pulse energy here refers to an energy per pulse of ultrashort pulsed oscillation laser light used in a laser engraving step. The unit: J in the energy per pulse of the laser light is a value obtained by dividing the average power (unit: W) by the repetition frequency (unit: pulse/sec).

The overlap ratio of the laser in the processing step is preferably 50.0% or more and 99.9% or less, 60.0% or more and 99.0% or less, or 70.0% or more and 99.0% or less. The overlap ratio of the laser is 50.0% or more to result in a tendency to ensure a sufficient laser irradiation intensity. The overlap ratio of the laser is 99.0% or less to result in a tendency to enable a thermal influence on the resin layer 11 to be more reduced. Thus, there is a tendency to enable a depressed pattern having a width substantially equal to the laser beam diameter to be obtained without excess melting or removal of the resin layer 11.

The overlap ratio of the laser light can be calculated by the ratio of the area overlapped or the ratio of the diameter overlapped, in the laser light with which the printing original plate is irradiated, with respect to each continuous pulse.

The spot diameter of the laser is preferably 1.0 $\mu$m or more and 20 $\mu$m or less. Thus, for example, a fine depressed pattern having a width of 1.0 $\mu$m or more and less than 500 $\mu$m and a depth of 0.10 $\mu$m or more and less than 100

μm can be formed with high accuracy.

### 3. Printing method

A printing method of the present embodiment includes a coating step of filling the cell in the printing intaglio plate of the present embodiment, with an ink, and a transfer step of transferring the ink with which the cell is filled, to a surface of a substrate, to obtain a print product.

### 3.1. Coating step

The coating step is a step of filling the cell in the printing intaglio plate of the present embodiment, with an ink. Specifically, the plate surface 12 of the printing intaglio plate 10 is coated with the ink 22 through a furnisher 23. Here, the cell 13 and the land 13a are coated with the ink 22. Next, an excess ink 22 with which the land 13a is coated is removed by the doctor blade 24.

### 3.2. Transfer step

The transfer step is a step of transferring the ink with which the cell is filled, to a surface of a substrate, to obtain a print product. Specifically, the ink 22 with which the cell 13 is filled can be transferred to a surface of the substrate 20 by pushing the plate surface 12 of the resin layer 11 and the substrate 20 by the cylinder 14 and an impression cylinder 21.

### 4. Print product

A print product of the present embodiment is a print product obtained by printing with the printing intaglio plate of the present embodiment, in which the ink concentration in a solid region is 2.10 or more. Alternatively, a print product of the present embodiment is one in which the transfer ratio in a highlight region is 90% or more and the ink concentration in the highlight region is 0.50 or less.
The ink concentration in the solid region is 2.10 or more, preferably 2.20 or more and 10 or less. The transfer ratio in the highlight region is 90% or more, preferably 95% or more and 100% or less.

### Examples

Hereinafter, the present invention is more specifically described with reference to Examples and Comparative Examples. The present invention is not limited by the following Examples at all.

### 1. Each measurement method

### 1.1. Surface free energy

A sample of a smooth resin layer with no cell formed was prepared, and the contact angle thereof was measured by a sessile drop method with a solid-liquid interface analyzer DropMaster 501 (trade name, manufactured by Kyowa Interface Science Co., Ltd.). Specifically, the sample was left to still stand in a constant temperature and humidity room at a temperature of 23°C and a relative humidity of 50% for one day before measurement. Thereafter, purified water, ethylene glycol, or diiodomethane (manufactured by Kanto Kagaku) was used as a probe solution, to measure the contact angle of the surface of the sample. Here, a value was obtained by automatically measuring the contact angle after 15 seconds after contact of each probe solution with the sample, at an ejection time of 100 ms and an ejection voltage of 4000 mV, by use of a stainless needle 22G (manufactured by Kyowa Interface Science Co., Ltd.). The surface free energy of the sample was automatically calculated from the Kitazaki-Hata computation expression incorporated into analysis software (FAMAS).

### 1.2. Shore hardness

A sample of a smooth resin layer with no cell formed was prepared. Specifically, the sample was left to still stand in a constant temperature and humidity room at a temperature of 23°C and a relative humidity of 50% for one day before measurement. Thereafter, a Teclock automatic hardness tester (ShoreA GS 0719 G) was used, the sample was mounted on a stage at a load of 1 kg, the hardness tester was dropped, and a value obtained at 15 seconds thereafter was defined as the Shore A hardness. In Comparative Example 3, the value of the Shore A hardness exceeded 90 degrees and thus the value of the Shore D hardness was measured.

1.3. Coefficient of variation in cell volume

A sample of a resin layer with a cell formed was prepared. A laser microscope (Keyence Corporation, VK-X100) was used to measure the cell volume of the cell at the same ink concentration in the highlight region, randomly at 20 points, at an observation magnification of 20x and a scan pitch of 0.75 $\mu$m in the depth direction. The coefficient of variation was calculated from the resulting cell volumes at 20 points, based on the following expression.

Coefficient of variation in cell volume = Standard deviation of cell volume/Arithmetic average of cell volume

2. Production example

2.1. Printing original plate 1

2.1.1. Production of support medium

A condensation reaction of 93 g of ethylene glycol, 374 g of neopentyl glycol, and 382 g of phthalic acid was made at a reaction temperature of 180°C and a reduced pressure of 1330 Pa in an air atmosphere for 6 hours, and thereafter 125 g of 4,4-diphenylene diisocyanate was added to further perform the reaction at 80°C for 5 hours, thereby obtaining a resin. A polyethylene terephthalate film having a thickness of 125 $\mu$m was coated with an aqueous 10% solution of this resin, and biaxially stretched after coating, thereby obtaining a polyethylene terephthalate film having an undercoat layer. The thickness of the undercoat layer was 0.05 $\mu$m.
Next, a condensation reaction of 624 g of neopentyl glycol, 93 g of ethylene glycol, 485 g of sebacic acid, and 382 g of isophthalic acid was made at a reaction temperature of 180°C and a reduced pressure of 1330 Pa in an air atmosphere for 6 hours, and thereafter 87 g of trimethylene diisocyanate was added to further perform the reaction for 5 hours, thereby obtaining a polyol. To 15 parts by mass of this polyol was added 1 part by mass of xylene diisocyanate, and these were dissolved in ethyl acetate to obtain a uniform urethane-based adhesive solution.
The undercoat layer was coated with the urethane-based adhesive solution obtained, by use of a knife coater, and dried at 80°C for 3 minutes, thereby forming an adhesive layer having a thickness of 10 $\mu$m. Thus, a support medium of a polyethylene terephthalate film having a combined thickness of 135 $\mu$m with the thickness of the adhesive layer (hereinafter, simply referred to as "support medium".) was obtained.

2.1.2. Production of resin layer 1

Photosensitive resin composition 1 was obtained by uniformly kneading 85 parts by mass of a thermoplastic elastomer (styrene-butadiene block copolymer, trade name "KX-405" manufactured by Kraton Polymer Japan Ltd., number average molecular weight (Mn) $10 \times 10^4$, styrene content 24% by mass), 10 parts by mass of a liquid rubber elastomer as a plasticizer (liquid polybutadiene polymer, trade name "LBR-352" manufacture by Kuraray Co., Ltd., number average molecular weight (Mn) 6200), 3 parts by mass of 1,9-nonanemethylene diacrylate as a photopolymerizable monomer (trade name "NMDA", manufactured by Kyoeisha Chemical Co., Ltd.), 5 parts by mass of 2,2-dimethoxy-2-phenyl acetophenone as a photopolymerization initiator, 1 part by mass of 2,6-di-t-butyl-p-cresol as a polymerization inhibitor, and 0.15 parts by mass of carbinol-modified silicone oil (trade name "KF-6000" manufactured by Shin-Etsu Chemical Co., Ltd.), with a kneader heated to 180°C.
Next, a hot press at 120°C was used, photosensitive resin composition 1 was sandwiched between the support medium and the polyethylene terephthalate film (surface protection film), and the resultant was molded so that the entire thickness was 1 mm. Thereafter, the surface protection film was released, to obtain a layered article in which resin layer 1 before exposure was formed on the support medium.
Next, an exposure apparatus was used to expose resin layer 1 before exposure so that the amount of exposure from the support medium side was 500 mJ/cm$^2$ and the amount of light from the printing surface side was 8000 mJ/cm$^2$, to obtain a layered article in which resin layer 1 after exposure was formed on the support medium. The size of resin layer 1 was 150 mm $\times$ 400 mm.
The exposure apparatus used here was an AFP-1321EHQ-type platemaker (trade name, manufactured by Asahi Kasei Corporation) equipped with an 80-W ultraviolet fluorescent lamp having a center wavelength region at a wavelength of 370 nm. The amount of exposure was calculated with an UV-35 filter (trade name, manufactured by ORC Manufacturing Co., Ltd.) of UV-MO2. An UV-35 filter (trade name, manufactured by ORC Manufacturing Co., Ltd.) of an ultraviolet measurement tool UV-MO2 (trade name, manufactured by ORC Manufacturing Co., Ltd.) was used for measurement, and thus the light irradiation intensity immediately below the light source of the exposure apparatus was 12.0 mW/cm$^2$.

2.1.3. Production of printing original plate 1

The layered article obtained as described above was wound on a side surface of a cylinder so that resin layer 1 was located on the outer side and fixed by a tape, thereby obtaining printing original plate 1.

2.2. Printing original plate 2

Printing original plate 2 was obtained in the same manner as the method for producing printing original plate 1 except that resin layer 2 after exposure was formed with photosensitive resin composition 2 in which the amount of use of carbinol-modified silicone oil (trade name "KF-6000" manufactured by Shin-Etsu Chemical Co., Ltd.) was 2 parts by mass, in production of the resin layer.

2.3. Printing original plate 3

Photosensitive resin composition 3 was obtained by uniformly kneading 60 parts by mass of a thermoplastic elastomer (styrene-butadiene block copolymer, trade name "KX-405" manufactured by Kraton Polymer Japan Ltd., number average molecular weight (Mn) $10 \times 10^4$, styrene content 24% by mass), 24 parts by mass of liquid paraffin as a plasticizer (trade name "Smoil P350P" manufactured by MORESCO, number average molecular weight (Mn) 483), 5 parts by mass of a liquid rubber elastomer as a plasticizer (liquid polybutadiene polymer, trade name "LBR-352" manufacture by Kuraray Co., Ltd., number average molecular weight (Mn) 6200), 1 mass of 1,9-nonanemethylene diacrylate as a photopolymerizable monomer (trade name NMDA manufactured by Kyoeisha Chemical Co., Ltd.), 5 mass of 2,2-dimethoxy-2-phenyl acetophenone as a photopolymerization initiator, 1 part by mass of 2,6-di-t-butyl-p-cresol as a polymerization inhibitor, and 0.15 parts by mass of amino-modified silicone oil (trade name "KF-8000" manufactured by Shin-Etsu Chemical Co., Ltd.), with a kneader heated to 180°C.

Printing original plate 3 was obtained in the same manner as the method for producing printing original plate 1 except that resin layer 3 after exposure was formed with photosensitive resin composition 3 instead of photosensitive resin composition 1 in production of the resin layer.

2.4. Printing original plate 4

Printing original plate 4 was obtained in the same manner as the method for producing printing original plate 3 except that resin layer 4 after exposure was formed with photosensitive resin composition 4 in which the amount of use of amino-modified silicone oil (trade name "KF-8000" manufactured by Shin-Etsu Chemical Co., Ltd.) was 1 part by mass, in production of the resin layer.

2.5. Printing original plate 5

Photosensitive resin composition 5 was obtained by uniformly kneading 77 parts by mass of a thermoplastic elastomer (styrene-isoprene block copolymer, trade name "D-1161" manufactured by Kraton Polymer Japan Ltd., number average molecular weight (Mn) $18 \times 10^4$, styrene content 15% by mass), 5 parts by mass of liquid polybutadiene as a plasticizer (trade name "B2000" manufactured by Nippon Soda Co., Ltd.), 3 parts by mass of 1,9-nonanemethylene diacrylate as a photopolymerizable monomer, 10 parts by mass of 2,2-dimethoxy-2-phenyl acetophenone as a photopolymerization initiator, 5 parts by mass of 2,6-di-t-butyl-p-cresol as a polymerization inhibitor, and 0.2 parts by mass of carbinol-modified silicone oil (trade name "KF-6000" manufactured by Shin-Etsu Chemical Co., Ltd.), with a kneader heated to 160°C.

Printing original plate 5 was obtained in the same manner as the method for producing printing original plate 1 except that resin layer 5 after exposure was formed with photosensitive resin composition 5 instead of photosensitive resin composition 1 in production of the resin layer.

2.6. Printing original plate 6

Printing original plate 6 was obtained in the same manner as the method for producing printing original plate 5 except that resin layer 6 after exposure was formed with photosensitive resin composition 6 in which the amount of use of carbinol-modified silicone oil (trade name "KF-6000" manufactured by Shin-Etsu Chemical Co., Ltd.) was 1 part by mass, in production of the resin layer.

2.7. Printing original plate 7

Printing original plate 7 was obtained in the same manner as the method for producing printing original plate 1 except that resin layer 1 before exposure (hereinafter, referred to as "resin layer 7") was used without exposure in production of the resin layer.

2.8. Printing original plate 8

A three-necked flask equipped with a stirring blade and a cooling tube was charged with 2 parts by mass of (3-mercaptopropyl)triethoxysilane (manufactured by FUJIFILM Wako Pure Chemical Corporation), 15 parts by mass of dipentaerythritol hexaacrylate (manufactured by Daicel-Cytec Co., Ltd.), 28 parts by mass of polyvinyl butyral (manufactured by Denka Co., Ltd.), 25 parts by mass of bisbutoxyethyl adipate (manufactured by FUJIFILM Wako Pure Chemical Corporation), 4 parts by mass of carbon black, and 20 parts by mass of propylene glycol monomethyl ether acetate (manufactured by FUJIFILM Wako Pure Chemical Corporation), and the mixture was heated and melted with stirring at 70°C for 120 minutes. After the temperature of this solution reached 40°C, 8 parts by mass of a silicone alkoxy oligomer (manufactured by Shin-Etsu Chemical Co., Ltd.) and Perbutyl z (manufactured by NOF Corporation) were added, and further stirred for 10 minutes, to produce thermosetting resin composition 8 having fluidity.
Next, a cylindrical support medium made of glass fiber-reinforced plastic, having an inner diameter of 126.388 mm, a width of 150 mm, and a thickness of 2.00 mm, was coated with thermosetting resin composition 8 by use of a doctor blade. A coating product was protected by a PET film so as not to be leaked, and the coating product was placed in an oven and retained at 90°C for 1 hour, and then further heated at 85°C for 3 hours, to form resin layer 8 and obtain printing original plate 8.

2.9. Printing original plate 9

A three-necked flask equipped with a stirring blade and a cooling tube was charged with 2 parts by mass of (3-mercaptopropyl)trimethoxysilane (manufactured by FUJIFILM Wako Pure Chemical Corporation), 15 parts by mass of dipentaerythritol hexaacrylate (manufactured by Daicel-Cytec Co., Ltd.), 28 parts by mass of polyvinyl butyral (manufactured by Denka Co., Ltd.), 25 parts by mass of bisbutoxyethyl adipate (manufactured by FUJIFILM Wako Pure Chemical Corporation), 4 parts by mass of carbon black, and 20 parts by mass of propylene glycol monomethyl ether acetate (manufactured by FUJIFILM Wako Pure Chemical Corporation), and the mixture was heated and melted with stirring at 70°C for 120 minutes. After the temperature of this solution reached 40°C, 8 parts by mass of a silicone alkoxy oligomer (manufactured by Shin-Etsu Chemical Co., Ltd.) and Perbutyl z (manufactured by NOF Corporation) were added, and further stirred for 10 minutes, to produce thermosetting resin composition 9 having fluidity.
Next, printing original plate 9 was obtained by the same operation as in printing original plate 8 except that thermosetting resin composition 9 obtained was used to form resin layer 9.

2.10. Printing original plate 10

A three-necked flask equipped with a stirring blade and a cooling tube was charged with 2 parts by mass of 3-mercaptopropylmethyldimethoxysilane (manufactured by FUJIFILM Wako Pure Chemical Corporation), 15 parts by mass of dipentaerythritol hexaacrylate (manufactured by Daicel-Cytec Co., Ltd.), 28 parts by mass of polyvinyl butyral (manufactured by Denka Co., Ltd.), 25 parts by mass of bisbutoxyethyl adipate (manufactured by FUJIFILM Wako Pure Chemical Corporation), 4 parts by mass of carbon black, and 20 parts by mass of propylene glycol monomethyl ether acetate (manufactured by FUJIFILM Wako Pure Chemical Corporation), and the mixture was heated and melted with stirring at 70°C for 120 minutes. After the temperature of this solution reached 40°C, 8 parts by mass of a silicone alkoxy oligomer (manufactured by Shin-Etsu Chemical Co., Ltd.) and Perbutyl z (manufactured by NOF Corporation) were added, and further stirred for 10 minutes, to produce thermosetting resin composition 10 having fluidity.
Next, printing original plate 10 was obtained by the same operation as in printing original plate 8 except that thermosetting resin composition 10 obtained was used to form resin layer 10.

2.11. Printing original plate 11

A three-necked flask equipped with a stirring blade and a cooling tube was charged with 2 parts by mass of 4,4,13,13-tetraethoxy-3,14-dioxa-8,9-dithia-4,13-disilahexadecane (manufactured by FUJIFILM Wako Pure Chemical Corporation), 15 parts by mass of dipentaerythritol hexaacrylate (manufactured by Daicel-Cytec Co., Ltd.), 28 parts by mass of polyvinyl butyral (manufactured by Denka Co., Ltd.), 25 parts by mass of bisbutoxyethyl adipate (manufactured by FUJIFILM Wako Pure Chemical Corporation), 4 parts by mass of carbon black, and 20 parts by mass of propylene glycol monomethyl ether acetate (manufactured by FUJIFILM Wako Pure Chemical Corporation), and the mixture was heated and melted with stirring at 70°C for 120 minutes. After the temperature of this solution reached 40°C, 8 parts by mass of a silicone alkoxy oligomer (manufactured by Shin-Etsu Chemical Co., Ltd.) and Perbutyl z (manufactured by NOF Corporation) were added, and further stirred for 10 minutes, to produce thermosetting resin composition 11 having fluidity.

Next, printing original plate 11 was obtained by the same operation as in printing original plate 8 except that thermosetting resin composition 11 obtained was used to form resin layer 11.

2.12. Printing original plate 12

Photosensitive resin composition 12 was obtained by uniformly kneading 85 parts by mass of a thermoplastic elastomer (styrene-butadiene block copolymer, trade name "KX-405" manufactured by Kraton Polymer Japan Ltd., number average molecular weight (Mn) $10 \times 10^4$, styrene content 24% by mass), 10 parts by mass of a liquid rubber elastomer as a plasticizer (liquid polybutadiene polymer, trade name "LBR-352" manufacture by Kuraray Co., Ltd., number average molecular weight (Mn) 6200), 3 parts by mass of 1,9-nonanemethylene diacrylate as a photopolymerizable monomer (trade name NMDA, manufactured by Kyoeisha Chemical Co., Ltd.), 5 mass of 2,2-dimethoxy-2-phenyl acetophenone as a photopolymerization initiator, and 1 part by mass of 2,6-di-t-butyl-p-cresol as a polymerization inhibitor, with a kneader heated to 180°C.

Printing original plate 12 was obtained in the same manner as the method for producing printing original plate 1 except that resin layer 12 after exposure was formed with photosensitive resin composition 12 instead of photosensitive resin composition 1 in production of the resin layer.

2.13. Printing original plate 13

Photosensitive resin composition 13 was obtained by uniformly kneading 75 parts by mass of a thermoplastic elastomer (styrene-butadiene block copolymer, trade name "KX-405" manufactured by Kraton Polymer Japan Ltd., number average molecular weight (Mn) $10 \times 10^4$, styrene content 24% by mass), 9 parts by mass of a liquid rubber elastomer as a liquid polybutadiene polymer as a plasticizer (representative name "LBR-352" manufacture by Kuraray Co., Ltd., number average molecular weight (Mn) 6200), 3 parts by mass of 1,9-nonanemethylene diacrylate as a photopolymerizable monomer (trade name NMDA, manufactured by Kyoeisha Chemical Co., Ltd.), 5 mass of 2,2-dimethoxy-2-phenyl acetophenone as a photopolymerization initiator, 1 part by mass of 2,6-di-t-butyl-p-cresol as a polymerization inhibitor, and 12 parts by mass of carbinol-modified silicone oil [KF-6000: manufactured by Shin-Etsu Chemical Co., Ltd.], with a kneader heated to 180°C.

Printing original plate 13 was obtained in the same manner as the method for producing printing original plate 1 except that resin layer 13 after exposure was formed with photosensitive resin composition 13 instead of photosensitive resin composition 1 in production of the resin layer.

2.14. Printing original plate 14

After 447.24 g of polycarbonate diol (number average molecular weight (Mn) 1990, trade name "PCDL L4672" manufactured by Asahi Kasei Corporation, OH value 56.4 mg/KOHg) and 30.83 g of tolylene diisocyanate were added to a 1-L separable flask equipped with a thermometer, a stirrer, and a reflux tool, and reacted for about 3 hours under warming to 80°C, 14.83 g of 2-metacryloyloxy isocyanate was added, and these were further reacted for about 3 hours, to produce a resin (number average molecular weight (Mn) 10000) which had a methacrylic group (about 2 polymerizable unsaturated groups in molecule, on average per molecule) at an end and which was liquid at 20°C.

Photosensitive resin composition 14 was obtained by mixing 100 parts by mass of the resin obtained, 59 parts by mass of a monomer component (mixture of 35 parts by mass of phenoxyethyl methacrylate, 14 parts by mass of butoxy diethylene glycol methacrylate, and 10 parts by mass of trimethylolpropane trimethacrylate), 1.5 parts by mass of a silicone compound (manufactured by Shin-Etsu Chemical Co., Ltd., methylstyryl-modified silicone oil (trademark "KF-410", refractive index: 1.480, number average molecular weight: since two peaks at 7890 and 700 were observed and the ratio was 4.3:1, the number average molecular weight was 6530 by division at the area ratio. Liquid at 20°C), 1.5 parts by mass of carbinol-modified silicone oil (trademark "X-22-160AS", refractive index: 1.420, number average molecular weight: 750, liquid at 20°C), 7.7 parts by mass of porous fine powder silica as an inorganic porous body (trademark "SYLOSPHERE C" manufactured by Fuji Silysia Chemical Ltd.)-1504, number average particle size 4.5 $\mu$m, specific surface area 520 m2/g, average pore size 12 nm, pore volume 1.5 ml/g, loss on ignition 2.5 wt%, amount of oil absorption 290 ml/100 g), 2.4 parts by mass of a photopolymerization initiator (0.9 parts by mass of 2,2-dimethoxy-2-phenyl acetophenone and 1.5 parts by mass of benzophenone), and 0.5 parts by mass of 2,6-di-t-butylacetophenone.

Here, benzophenone (BP) was a hydrogen abstraction type photopolymerization initiator (d) and 2,2-dimethoxy-2-phenyl acetophenone (DMPAP) was a disintegration type photopolymerization initiator.

Next, a cylindrical support medium made of glass fiber-reinforced plastic, having an inner diameter of 126.388 mm, a width of 150 mm, and a thickness of 2.00 mm, was coated with photosensitive resin composition 14 by use of a doctor blade. Next, while an air cylinder was rotated at a rate of 0.2 rotations per second, photosensitive resin composition 14 was irradiated in the air with light emitted through an opening (opening dimension: 40 mm × 310 mm) of a metal halide lamp (trademark "M056-L21" manufactured by Eye Graphics Company), to form resin layer 14 cured. According to the value obtained by time integration of the illuminance measured with an UV-35-APR filter, the amount of energy radiated was 4000 mJ/cm$^2$. The lamp illuminance on a surface irradiated was measured with an UV meter (trademark "UV-M02" manufactured by ORC Manufacturing Co., Ltd.). The lamp illuminance measured with trademark "UV-35-APR filter" (manufactured by ORC Manufacturing Co., Ltd.) was 100 mW/cm$^2$, and the lamp illuminance measured with trademark "UV-25 filter" (manufactured by ORC Manufacturing Co., Ltd.) was 14 mW/cm$^2$. The thickness of the resulting photosensitive resin-cured product layer was adjusted to about 1 mm, cut with an ultrahard turning tool so that the circumference of a cylindrical printing original plate was 400 mm, roughly ground by a grinder, and then precisely polished with a film provided with a fine rubbing stone on the surface thereof, to produce printing original plate 14.

3. Method for producing printing intaglio plate

Printing original plates 1 to 14 obtained as described above were each subjected to laser engraving with the following ultrashort pulsed oscillation laser light, to form a cell on a surface of such each plate, thereby obtaining each printing intaglio plate of Examples 1 to 18 and Comparative Examples 1 to 4. Specifically, a laser beam was fixed, and the XY stage was moved in the columnar axis direction with rotation in the circumferential direction of each of printing original plates 1 to 14 to be engraved, to form each lozenge-shaped depressed pattern including a plurality of processed lines. The M2 value indicating the quality of the beam was less than 1.8. The scanning speed in the columnar axis direction was adjusted depending on the processing speed of the ultrashort pulsed laser so that processing was made at a pitch of 10 μm.

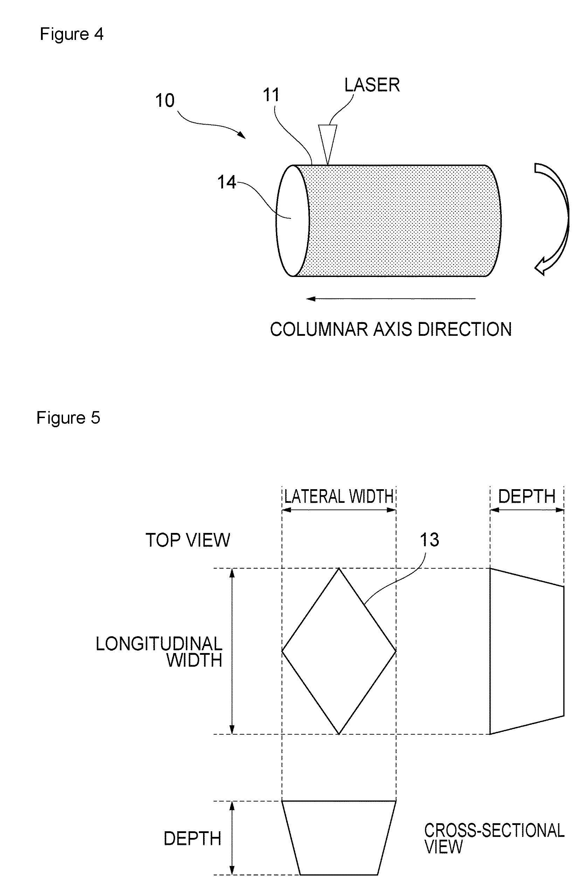

The size of each cell was as follows. A relationship among the lateral width, the longitudinal width, and the depth of the cell is illustrated in Figure 5.

Highlight region: lateral width 30 μm/longitudinal width 60 μm/depth 6 μm of cell

Solid region: lateral width 140 μm/longitudinal width 185 μm/depth 35 μm of cell

Number of lines: 175 lpi

The laser wavelengths and the configuration of each oscillation apparatus were as follows.

Laser wavelength 515 nm: processing by use of a second harmonic of 515 nm, with AMPHOS 2000 (trademark, manufactured by AMPHOS GmbH).

Laser wavelength 1064 nm: processing by use of a fundamental harmonic of 1064 nm, "IceFyre 1064-50" (trademark, manufactured by Spectra-Physics) of a YAG laser as an end-pumping type semiconductor laser-excited, Q-switched solid-state laser.

Laser wavelength 343 nm: processing by use of a third harmonic of 343 nm, with a disc-type ultrashort pulsed semiconductor laser "TruMicro 5380" (trademark, manufactured by Trumpf SE + Co. KG).

4. Printing method

A CM-type mini proof press (cylinder portion: width 150 mm/circumference 400 mm) manufactured by Nissio Gravure Co., Ltd., was used to perform printing onto an OPP film with an ink having the following compositional ratio, at a printing speed of 40 m/min.

4.1. Ink 1

Ink 1 used here was obtained by mixing 5 parts by mass of Superior (manufactured by SAKATA INX CORPORATION) with 1 part by mass of a dilution solvent (trade name "Superior solvent 2t" manufactured by SAKATA INX CORPORATION). The viscosity of ink, measured with Zahn cup #3, was 15 s.

4.2. Ink 2

Ink 2 used here was obtained by mixing 5 parts by mass of Lioalpha (manufactured by Toyo Ink Co., Ltd.) with 1 part by mass of a dilution solvent (trade name "LN102 solvent" manufactured by Toyo Ink Co., Ltd.). The viscosity of ink, measured with Zahn cup #3, was 17 s.

5. Evaluation

5.1. Transfer stability of ink to highlight region

Reflected light in the highlight region of the print product obtained by the printing method described above was observed at an observation magnification of 10x with a Stereo Microscope SMZ18 (manufactured by Nikon Instruments Inc.). The area of the ink actually transferred onto the OPP film was measured with respect to each cell on each of the printing intaglio plates. The area ratio of the ink transferred was evaluated under the assumption that the area ratio in the case where all the ink in each cell of each of the printing intaglio plates was transferred was 100% by area. A case where the area ratio of the ink transferred with respect to each cell was 70% by area or more was rated as "Transferred", and a case where the area ratio of the ink transferred was less than 70% by area was rated as "Not transferred".
The rating was performed in a range of 100 mm × 100 mm in the highlight region, and the proportion of a cell rated as "Transferred" in the entire cell included in this region was calculated as the ink transfer ratio. The transfer stability of the ink to the highlight region was evaluated according to the following evaluation criteria.

(Evaluation criteria)

5: an ink transfer ratio of 95% or more

4: an ink transfer ratio of 90% or more and less than 95%

3: an ink transfer ratio of 85% or more and less than 90%

2: an ink transfer ratio of 80% or more and less than 85%

1: an ink transfer ratio of less than 80%

5.2. Ink deposition on solid region

The ink concentration in the solid region of the print product obtained by the printing method described above was measured with eXact (X-Rite, Inc., trademark). The ink concentration was measured at 10 points arbitrarily selected in the solid region, and the arithmetic average was calculated as "solid density". The ink deposition on the solid region was evaluated according to the following evaluation criteria.

(Evaluation criteria)

5: an ink concentration in the solid region of 2.2 or more
4: an ink concentration in the solid region of 2.1 or more and less than 2.2
3: an ink concentration in the solid region of 2.0 or more and less than 2.1
2: an ink concentration in the solid region of 1.9 or more and less than 2.0
1: an ink concentration in the solid region of less than 1.9

[Table 1]

| | Resin layer | Wavelength nm | Pulse width ps | Power W | Frequency Hz | Pulse energy J | Speed mm/s | Overlap ratio % | Spot diameter μm | Shore hardness degrees | Surface free energy mN/m | Cell area ratio of 5% Coefficient of variation in cell volume | Ink | Highlight region Transfer stability | Solid portion Ink deposition |
|---|---|---|---|---|---|---|---|---|---|---|---|---|---|---|---|
| Example 1 | Resin layer 1 | 515 | 0.7 | 10 | 1.00E+06 | 1.00E-05 | 2000 | 86.8 | 15 | A77 | 32 | 0.135 | Ink 1 | 5 | 5 |
| Example 2 | Resin layer 2 | 515 | 0.7 | 10 | 1.00E+06 | 1.00E-05 | 2000 | 86.8 | 15 | A77 | 25 | 0.115 | Ink 1 | 5 | 5 |
| Example 3 | Resin layer 3 | 515 | 0.7 | 10 | 1.00E+06 | 1.00E-05 | 2000 | 86.8 | 15 | A42 | 32 | 0.117 | Ink 1 | 4 | 5 |
| Example 4 | Resin layer 4 | 515 | 0.7 | 10 | 1.00E+06 | 1.00E-05 | 2000 | 86.8 | 15 | A42 | 25 | 0.099 | Ink 1 | 4 | 5 |
| Example 5 | Resin layer 5 | 515 | 0.7 | 10 | 1.00E+06 | 1.00E-05 | 2000 | 86.8 | 15 | A60 | 33 | 0.141 | Ink 1 | 5 | 4 |
| Example 6 | Resin layer 6 | 515 | 0.7 | 10 | 1.00E+06 | 1.00E-05 | 2000 | 86.8 | 15 | A60 | 27 | 0.139 | Ink 1 | 5 | 4 |
| Example 7 | Resin layer 1 | 343 | 0.12 | 10 | 1.00E+06 | 1.00E-05 | 2000 | 86.8 | 15 | A77 | 32 | 0.123 | Ink 1 | 5 | 4 |
| Example 8 | Resin layer 1 | 515 | 0.7 | 100 | 1.00E+07 | 1.00E-05 | 10000 | 93.3 | 15 | A77 | 32 | 0.097 | Ink 1 | 4 | 5 |
| Example 9 | Resin layer 1 | 515 | 0.7 | 5 | 1.00E+06 | 5.00E-06 | 500 | 96.7 | 15 | A77 | 32 | 0.147 | Ink 1 | 4 | 5 |
| Example 10 | Resin layer 1 | 515 | 0.7 | 50 | 2.00E+07 | 2.50E-06 | 10000 | 96.7 | 15 | A77 | 32 | 0.130 | Ink 1 | 5 | 4 |
| Example 11 | Resin layer 1 | 515 | 0.7 | 50 | 1.00E+06 | 5.00E-05 | 1000 | 87.5 | 8 | A77 | 32 | 0.144 | Ink 1 | 5 | 5 |
| Example 12 | Resin layer 1 | 515 | 0.7 | 10 | 1.00E+06 | 1.00E-05 | 2000 | 75 | 8 | A77 | 32 | 0.089 | Ink 1 | 5 | 4 |
| Example 13 | Resin layer 7 | 515 | 0.7 | 10 | 1.00E+06 | 1.00E-05 | 2000 | 86.8 | 15 | A50 | 34 | 0.178 | Ink 1 | 4 | 4 |
| Example 14 | Resin layer 8 | 515 | 0.7 | 10 | 1.00E+06 | 1.00E-05 | 2000 | 86.8 | 15 | A50 | 34 | 0.156 | Ink 1 | 4 | 4 |

(continued)

| | Resin layer | Wavelength nm | Pulse width ps | Power W | Frequency Hz | Pulse energy J | Speed mm/s | Overlap ratio % | Spot diameter μm | Shore hardness degrees | Surface free energy mN/m | Cell area ratio of 5% Coefficient of variation in cell volume | Ink | Highlight region Transfer stability | Solid portion Ink deposition |
|---|---|---|---|---|---|---|---|---|---|---|---|---|---|---|---|
| Example 15 | Resin layer 9 | 515 | 0.7 | 10 | 1.00E+06 | 1.00E-05 | 2000 | 86.8 | 15 | A50 | 34 | 0.147 | Ink 1 | 5 | 4 |
| Example 16 | Resin layer 10 | 515 | 0.7 | 10 | 1.00E+06 | 1.00E-05 | 2000 | 86.8 | 15 | A50 | 34 | 0.187 | Ink 1 | 4 | 4 |
| Example 17 | Resin layer 11 | 515 | 0.7 | 10 | 1.00E+06 | 1.00E-05 | 2000 | 86.8 | 15 | A50 | 34 | 0.193 | Ink 1 | 4 | 5 |
| Example 18 | Resin layer 1 | 515 | 0.7 | 10 | 1.00E+06 | 1.00E-05 | 2000 | 86.8 | 15 | A77 | 32 | 0.135 | Ink 2 | 5 | 5 |
| Comparative Example 1 | Resin layer 12 | 515 | 0.7 | 10 | 1.00E+06 | 1.00E-05 | 2000 | 86.8 | 15 | A77 | 38 | 0.168 | Ink 1 | 2 | 1 |
| Comparative Example 2 | Resin layer 13 | 515 | 0.7 | 10 | 1.00E+06 | 1.00E-05 | 2000 | 86.8 | 15 | A74 | 9 | 0.146 | Ink 1 | 1 | 2 |
| Comparative Example 3 | Resin layer 14 | 515 | 0.7 | 10 | 1.00E+06 | 1.00E-05 | 2000 | 86.8 | 15 | D50 | 30 | 0.193 | Ink 1 | 2 | 2 |
| Comparative Example 4 | Resin layer 1 | 1064 | 1 | 10 | 1.00E+06 | 1.00E-05 | 2000 | 86.8 | 15 | A77 | 32 | 0.378 | Ink 1 | 1 | 4 |

**Industrial Applicability**

The present invention has an industrial applicability as a printing intaglio plate made of a resin, used for gravure printing and the like.

**Reference Signs List**

10 ... printing intaglio plate, 11 ... resin layer, 12 ... plate surface, 13 ... cell, 13a ... land, 14 ... cylinder, 15 ... support layer, 16 ... defect, 17 ... mold, 17a ... space, 20 ... substrate, 21 ... impression cylinder, 22 ... ink, 23 ... furnisher, 24 ... doctor blade.

**Claims**

1.   A printing intaglio plate comprising a resin layer constituting a plate surface, wherein

   a Shore A hardness of the resin layer is 30 degrees or more and 90 degrees or less,
   a surface free energy of the resin layer is 10 mN/m or more and 35 mN/m or less, and
   the resin layer comprises a cell on the plate surface and a coefficient of variation in cell volume of the cell, for printing at the same ink concentration, is 0.200 or less.

2.   The printing intaglio plate according to claim 1, wherein the same ink concentration is 0.50 or less.

3.   The printing intaglio plate according to claim 1, wherein the resin layer comprises at least one selected from the group consisting of a photosensitive resin and a thermosetting resin.

4.   The printing intaglio plate according to claim 1, wherein the resin layer comprises 0.10 parts by mass or more and 15.0 parts by mass or less of a silicone compound based on a total amount.

5.   The printing intaglio plate according to claim 1, wherein a depth of the cell is 0.10 $\mu$m or more and 100 $\mu$m or less.

6.   The printing intaglio plate according to claim 1, comprising a cylinder, wherein
   the resin layer of a cylindrical form is disposed on a surface of the cylinder.

7.   The printing intaglio plate according to claim 6, comprising a support layer between the cylinder and the resin layer of a cylindrical form.

8.   A method for producing the printing intaglio plate according to any one of claims 1 to 7, comprising a processing step of forming a depressed portion in the resin layer with a laser.

9.   The method for producing the printing intaglio plate according to claim 8, wherein an oscillation wavelength of the laser is 100 nm or more and 800 nm or less.

10.   The method for producing the printing intaglio plate according to claim 8, wherein

   the laser is a pulsed oscillation laser, and
   a pulse width of the pulsed oscillation laser is 1 fs or more and 1 ns or less.

11.   The method for producing the printing intaglio plate according to claim 10, wherein a pulse energy of the laser is 1.00 $\mu$J or more and 1.00 mJ or less.

12.   The method for producing the printing intaglio plate according to claim 10, wherein an overlap ratio of the laser in the processing step is 50.0% or more and 99.9% or less.

13.   The method for producing the printing intaglio plate according to claim 8, wherein a spot diameter of the laser is 1.0 $\mu$m or more and 20 $\mu$m or less.

14.   The method for producing the printing intaglio plate according to claim 8, wherein the resin layer is directly irradiated with the laser in the processing step.

15. The method for producing the printing intaglio plate according to claim 8, comprising, in the processing step, a step of disposing the resin layer on the cylinder and then forming the depressed portion or a step of forming the depressed portion in the resin layer in advance and then disposing the resin layer on the cylinder.

16. A printing method comprising

a coating step of filling the cell in the printing intaglio plate according to any one of claims 1 to 7, with an ink, and
a transfer step of transferring the ink with which the cell is filled, to a surface of a substrate, to obtain a print product.

17. A print product which is a print product obtained by printing with the printing intaglio plate according to any one of claims 1 to 7, wherein
an ink concentration in a solid region is 2.10 or more.

18. A print product, wherein

a transfer ratio in a highlight region is 90% or more, and
an ink concentration in the highlight region is 0.50 or less.

Figures

Figure 1A

Figure 1B

Figure 1C

Figure 1D

Figure 2A

METAL GRAVURE PLATE

| CYLINDER PRODUCTION | COPPER PLATING | CELL PROCESSING | CHROMIUM PLATING |

14

14

COPPER PLATING

14

CELL PROCESSING

14

CHROMIUM PLATING

ASAHI

ASAHI

Figure 2B

RESIN GRAVURE PLATE (PRODUCTION METHOD 1)

CYLINDER PRODUCTION

RESIN COATING

LASER IMAGING

Figure 2C

RESIN GRAVURE PLATE (PRODUCTION METHOD 2)

CYLINDER PRODUCTION — RESIN COATING — LASER IMAGING

Figure 2D

EP 4 631 736 A1

RESIN GRAVURE PLATE (PRODUCTION METHOD 3)

| CYLINDER PRODUCTION | RESIN COATING | SLEEVE FORMATION | LASER IMAGING |
|---|---|---|---|

Figure 2E

RESIN GRAVURE PLATE (PRODUCTION METHOD 4)

Figure 3

Figure 4

LASER

10
11
14

COLUMNAR AXIS DIRECTION

Figure 5

LATERAL WIDTH | DEPTH

TOP VIEW

13

LONGITUDINAL
WIDTH

DEPTH

CROSS-SECTIONAL
VIEW

**EP 4 631 736 A1**

## INTERNATIONAL SEARCH REPORT

| | International application No. |
|---|---|
| | **PCT/JP2023/043776** |

---

**A. CLASSIFICATION OF SUBJECT MATTER**

*B41N 1/12*(2006.01)i; *B41C 1/05*(2006.01)i; *B41M 1/10*(2006.01)i
FI: B41N1/12; B41C1/05; B41M1/10

According to International Patent Classification (IPC) or to both national classification and IPC

**B. FIELDS SEARCHED**

Minimum documentation searched (classification system followed by classification symbols)

B41N1/12; B41C1/05; B41M1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-254696 A (ASAHI KASEI CHEMICALS CORPORATION) 22 September 2005 (2005-09-22) claims 1-20, paragraphs [0032], [0072]-[0074], [0079], [0086]-[0110] | 1-9, 14-17 |
| Y | | 1-17 |
| Y | JP 2010-69836 A (ASAHI KASEI E-MATERIALS CORP.) 02 April 2010 (2010-04-02) claims 1-17, paragraphs [0008], [0076], [0077], [0084]-[0115] | 1-10, 13-17 |
| Y | WO 2021/182504 A1 (ASAHI KASEI KABUSHIKI KAISHA) 16 September 2021 (2021-09-16) claims 1-21, paragraphs [0073]-[0087], [0090]-[0122] | 10-13 |
| A | JP 2018-185421 A (ASAHI KASEI KABUSHIKI KAISHA) 22 November 2018 (2018-11-22) entire text | 1-17 |
| A | JP 2-101460 A (OOKURASHO INSATSU KYOKUCHO) 13 April 1990 (1990-04-13) entire text, all drawings | 1-17 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **22 February 2024** | **05 March 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
| --- |
| **PCT/JP2023/043776** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 4479432 A (TOPPAN PRINTING CO., LTD.) 30 October 1984 (1984-10-30) whole document | 1-17 |

Form PCT/ISA/210 (second sheet) (July 2022)

## INTERNATIONAL SEARCH REPORT

| International application No. |
| --- |
| **PCT/JP2023/043776** |

**Box No. III       Observations where unity of invention is lacking (Continuation of item 3 of first sheet)**

This International Searching Authority found multiple inventions in this international application, as follows:

The claims are classified into the following two inventions.

(Invention 1) Inventions in claims 1-17

The inventions in claims 1-17 have the special technical feature of a "printing intaglio plate, comprising a resin layer forming a printing surface, wherein the resin layer has a Shore A hardness of 30 degrees-90 degrees inclusive, has a surface free energy of 10 mN/m-35 mN/m inclusive and has a cell on the printing surface, and a coefficient of variance of the cell volume for printing at a constant ink density is 0.200 or less", and thus are classified as invention 1.

(Invention 2) Invention in claim 18

The invention in claim 18 and claim 1 classified as invention 1 share the technical feature of [printing]. However, this technical feature, without it being necessary to provide any documents as examples thereof, does not make a contribution over the prior art, and therefore, this technical feature cannot be said to be a special technical feature.

Moreover, there are no other same or corresponding special technical features among these inventions.

Furthermore, the invention in claim 18 is not dependent on claim 1. In addition, the invention in claim 18 is not substantially identical to or similarly closely related to any of the claims classified as invention 1.   Therefore, the invention in claim 18 cannot be classified as invention 1.

The invention in claim 18 has the special technical feature of a "printed matter having a transfer rate in a highlighted region is 90% or more and the highlighted region has an ink density of 0.50 or less", and thus is classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-17**

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2023/043776**

| Patent document cited in search report | | | Publication date (day/month/year) | Patent family member(s) | Publication date (day/month/year) |
|---|---|---|---|---|---|
| JP | 2005-254696 | A | 22 September 2005 | (Family: none) | |
| JP | 2010-69836 | A | 02 April 2010 | (Family: none) | |
| WO | 2021/182504 | A1 | 16 September 2021 | US 2023/0133371 A1 claims 1-21, paragraphs [0247]-[0299], [0303]-[0417] EP 4119343 A1 CN 115335238 A | |
| JP | 2018-185421 | A | 22 November 2018 | (Family: none) | |
| JP | 2-101460 | A | 13 April 1990 | (Family: none) | |
| US | 4479432 | A | 30 October 1984 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005254696 A